# EUROPEAN PATENT SPECIFICATION

(11) **EP 0 947 283 B1**
(45) Date of publication and mention of the grant of the patent: **17.07.2002**
(21) Application number: 97923709.6
(22) Date of filing: 28.05.1997
(51) Int. Cl.: B23K 35/30, B23K 35/40, B23K 35/368

(54) **A HIGH HARDNESS AND WEAR-RESISTING FLUX CORED WIRE**
HOCHVERSCHLEISSFESTER, MIT FLUSSMITTEL GEFÜLLTER DRAHT MIT HOHER HÄRTE
CABLE A AME AVEC DURETE ET RESISTANCE A L'USURE ELEVEES

(30) Priority: 15.07.1996 CN 96102347
(43) Date of publication of application: 06.10.1999
(73) Proprietor: Pan, Guoxi, Jinmen City, HuBei Province 448000 (CN)
(72) Inventor: Pan, Guoxi, Jinmen City, HuBei Province 448000 (CN)
(74) Representative: Liesegang, Eva
(86) International application number: PCT/CN97/00052
(87) International publication number: WO 98/02274

(56) References cited:
- WO-A-86/05733
- CN-U- 2 123 396
- GB-A- 1 078 697
- SU-A- 1 808 592
- US-A- 1 629 748
- R. KILLING ET AL: "Zum Ablauf der Legierungsvorgänge beim Auftragschweissen mit selbstschützenden Fülldrahtelektroden" SCHWEISSEN UND SCHNEIDEN., vol. 36, no. 7, July 1984 (1984-07), pages 309-315, XP002143789 DEUTSCHER VERLAG FUR SCHWEISSTECHNIK. DUSSELDORF., DE ISSN: 0036-7184

## Description

### Technical Field of the Invention

The present invention relates to a high hardness and wear-resisting flux cored welding wire, and particularly to a welding wire for repairing and welding cold roll.

### Background Art

R. KILLING et.al.: "Zum Ablauf der Legierungsvorgänge beim Auftragsschweissen mit selbstschützenden Fülldrahtelektroden" SCHWEISSEN UND SCHNEIDEN., vol. 36, no. 7, July 1984 (1984-07), pages 309-315, XP002143789 DEUTSCHE VERLAG FÜR SCHWEISSTECHNIK. DÜSSELDORF., DE ISSN: 0036-7184 discloses a welding wire comprising a flux core, including SiO₂, TiO₂, CaCO₃, CaF₂, NaAlF, Al₂O₂, MgO, CaO, K₂O.

The conventional stack welding material is mainly made of rare and noble metals, such as nickel, chromium, ferroniobium, cobalt, etc., as main ingredients and of carbon as additional composition. The prior art has the defects that the source of the material is insufficient and that the cost is high. On the other hand, carbon is used for enhancing the hardness, however, cracks appears when the hardness reaches to HRC 58. Even if quenching process is performed to enhance the hardness, the hardness may only reach to HRC 58 and the failure rate is high, which results in waste. As for cold roll, its hardness shall reach to over HRC 60. Some American specialists drew a conclusion that it is impossible for stack welding material to reach HRC 60. Sovinient experts also had an opinion that it is normal and certain for stack welding material to produce cracks when its hardness reaches to HRC 60.

A welding wire which is made of tungsten carbide, available from Stellite Welding Material Co. Ltd. (Shanghai), has a hardness of only HRC 52-58. Cracks appear when the hardness is higher.

A stack welding flux cored wire made of tungsten carbide; available from Jingluo Welding Wire Company in Luohe city of Henan Province in China, of the type TL-8705, has a hardness of HRC 52-58. Cracks appear when the hardness is higher.

Moreover, the hardness of the two kinds of stack welding material mentioned above is enhanced by quenching, but it still can not reach to HRC 60, their maximum hardness being only HRC 58. The quenching time is long and electricity consumption is high, as a result, its cost will increase. This kind of stack welding material can only be used for hot roll. As for repairing cold roll, there is still not suitable stack welding material so far.

### Object of the Invention

It is an object of the invention to provide a high hardness and wear-resisting flux cored wire in order to overcome the foregoing defects. The hardness of the wire can reach to HRC 62-65, even to HRC 66-69, and it can be used for repairing cold roll. Therefore, it has high values.

It is another object of the invention to provide a method for manufacturing a high hardness and wear-resisting flux cored wire. Wire made by this method can be used for repairing cold roll.

### Summary of the Invention

In order to achieve the above objects, according to one aspect of the present invention, there is provided with a high hardness and wear-resisting flux cored welding wire comprising a flux core and a skin layer, wherein the flux core has a composition in weight percentage comprising.
molybdenum 1-10%; tungsten 10-1%; graphite 10-1%; nickel 1-7%; vanadium 10-2%; chromium 40-20%; sodium silicon fluoride 5-15%; ferroniobium 10-1%; boron 10-25%; silica sand 2-10%; rare earth 1-8%.

The diameter of the wire is about 1.0-4.0 mm. The skin layer is of a thickness of 0.25-0.6 mm, which is made of low carbon steel, preferably of low carbon steel H08A.

According to another aspect of present invention, there is provided with a method for manufacturing a high hardness and wear-resisting flux cored wire, comprising the steps of preparing a raw material of a flux core according to the composition defined above, and grinding the raw material into a flux core powder and stirring thoroughly; preparing a low carbon steel strip and placing said flux core powder onto the steel strip; extruding and pressing the obtained structure into a cylindrical wire; and drawing said cylindrical wire with a wire drawing machine and obtaining the wire.

The wire can be used for repairing and welding cold roll without cracks at ambient temperature. Its mechanical performance meets the standard requirement. After repaired and welded, the roll is machined with a lathe or a grinder to achieve a required dimension.

### Advantages of the Invention

Compared with the prior art, the high hardness and wear-resisting flux cored wire of the present invention has the following advantages:
1. practical for repairing and welding cold roll with high economic valuables;
2. no crack;
3. high hardness of HRC 62-65, even to HRC 66-69, and good wear-resistance;
4. simple process and low cost.

### Detailed Description of Preferred embodiments

### Embodiment 1

Prepare a raw material of the composition in wt.% as follows: molybdenum 10%; tungsten 1%; graphite 1%; nickel 7%; vanadium 2%; chromium 20%; sodium silicon fluoride 15%; ferroniobium 1%; boron 25%; silica sand 10%; rare earth 8%. Grind these materials into power, stir thoroughly, and place onto a low carbon steel (H08A) strip with a thickness of 0.3 mm. Wind and press the obtained structure into a cylindrical wire with an extrusion apparatus. Then, draw out with a wire drawing machine, and a wire with a diameter of 1.0-4.0 mm is thus obtained.

### Embodiment 2

Prepare a raw material of the composition in wt.% as follows: molybdenum 1%; tungsten 10%; graphite 5%; nickel 1%; vanadium 10%; chromium 40%; sodium silicon fluoride 5%; ferroniobium 10%; boron 1%; silica sand 2%; rare earth 1%. Grind these materials into power, stir thoroughly, and place onto a low carbon steel (H08A) strip with a thickness of 0.5 mm. Wind and press the obtained structure into a cylindrical wire with an extrusion apparatus. Then, draw out with a wire drawing machine, and a wire with a diameter of 4 mm is thus obtained.

### Embodiment 3

Prepare a raw material of the composition in wt.% as follows: molybdenum 5%; tungsten 8%; graphite 3%; nickel 8%; vanadium 7%; chromium 39%; sodium silicon fluoride 13%; ferroniobium 6%; boron 9%; silica sand 5% and rare earth 4%, grind these components into powder and stir thoroughly and place onto a low carbon steel (H08A) strip with a thickness of 0.5 mm. Grind these materials into power, stir thoroughly, and place onto a low carbon steel (H08A) strip with a thickness of 0.5 mm. Wind and press the obtained structure into a cylindrical wire with an extrusion apparatus. Then, draw out with a wire drawing machine, and a wire with a diameter of 4 mm is thus obtained.

It is proved from the experiment of repairing and welding cold roll with the welding wire described in the three embodiments mentioned above that the hardness of each wire is greater than HRC 62 and is of good repairing results.

## Claims

1. A high hardness and wear-resisting flux cored wire comprising a flux core and a skin layer, wherein the flux core has a composition in weight percentage consisting of:
molybdenum 1-10%; tungsten 10-1%; graphite 10-1%; nickel 1-7%; vanadium 10-2%; chromium 40-20%; sodium silicon fluoride 5-15%; ferroniobium 10-1%; boron 10-25%; silica sand 2-10%; rare earth 1-8%,
the skin layer consisting of low carbon steel.

2. A wire according to claim 1, **characterized in that** said skin layer is made of low carbon steel H08A with a thickness of 0.6 mm.

3. A wire according to claim 1 or 2, **characterized in that** the composition of said flux core is
molybdenum 10%; tungsten 1%; graphite 1%; nickel 7%; vanadium 2%; chromium 20%; sodium silicon fluoride 15%; ferroniobium 1%; boron 25%; silica sand 10%; rare earth 8%.

4. A method for manufacturing a high hardness and wear-resisting flux cored wire, comprising the steps of
preparing a raw material of a flux core according to the composition defined in claim 1, and grinding the raw material into a flux core powder and stirring thoroughly;
preparing a low carbon steel strip and placing said flux core powder onto the steel strip;
extruding and pressing the structure obtained into a cylindrical wire; and
drawing said cylindrical wire with a wire drawing machine and obtaining the wire.

5. A method according to claim 4, **characterized in that** said steel strip is made of low carbon steel H08A.

6. A method according to claim 4, **characterized in that** the diameter of said wire is 1.0-4.0 mm.

7. A method according to claim 4, **characterized in that** the flux core has a composition of molybdenum 10%; tungsten 1%; graphite 1%; nickel 7%; vanadium 2%; chromium 20%; sodium silicon fluoride 15%; ferroniobium 1%; boron 25%; silica sand 10%; rare earth 8%.

## Patentansprüche

1. Verschleißfester Draht hoher Härte mit Flußmittelkern, umfassend einen Flußmittelkern und eine äußere Schicht, wobei der Flußmittelkern eine Zusammensetzung in Gew.% hat, bestehend aus:
Molybden 1-10%; Wolfram 10-1%; Graphit 10-1%; Nickel 1-7%; Vanadium 10-2%; Chrom 40-20%; Natriumsilicofluorid 5-15%; Ferroniobium 10-1%; Bor 10-25%: Quarzsand 2-10%; seltene Erden 1-8%,
wobei die äußere Schicht aus kohlenstoffarmem Stahl besteht.

2. Draht nach Anspruch 1, **dadurch gekennzeichnet, daß** die äußere Schicht aus kohlenstoffarmem Stahl H08A mit einer Dicke von 0,6 mm gemacht ist.

3. Draht nach Anspruch 1 oder 2, **dadurch gekennzeichnet, daß** die Zusammensetzung von besagtem Fließmittelkern
Molybden 10%; Wolfram 1%; Graphit 1%; Nickel 7%; Vanadium 2%; Chrom 20%; Natriumsilicofluorid 15%; Ferroniobium 1%; Bor 25%; Quarzsand 10%; seltene Erden 8%
ist.

4. Verfahren zum Herstellen eines verschleißfesten Drahts hoher Härte mit Flußmittelkern, umfassend die Schritte
Herstellung eines Rohmaterials eines Flußmittelkerns gemäß der in Anspruch 1 definierten Zusammensetzung und Zermahlen des Rohmaterials zu einem Flußmittelkernpulver und gründliches Rühren;
Herstellen eines Streifens aus kohlenstoffarmem Stahl und Aufbringen von besagtem Flußmittelkernpulver auf den Stahlstreifen;
Extrudieren und Pressen der erhaltenen Struktur zu einem zylindrischen Draht; und
Ziehen des besagten zylindrischen Drahts mit einer Drahtziehmaschine und Erhalten des Drahts.

5. Verfahren nach Anspruch 4, **dadurch gekennzeichnet, daß** besagter Stahlstreifen aus dem kohlenstoffarmen Stahl H08A gemacht wird.

6. Verfahren nach Anspruch 4, **dadurch gekennzeichnet, daß** der Durchmesser von besagtem Draht 1,0-4,0 mm ist.

7. Verfahren nach Anspruch 4, **dadurch gekennzeichnet, daß** der Flußmittelkern eine Zusammensetzung aus Molybden 10%, Wolfram 1%, Graphit 1%, Nickel 7%, Vanadium 2%, Chrom 20%, Natriumsilicofluorid 15%, Ferroniobium 1%, Bor 25%, Quarzsand 10%, seltene Erden 8% hat.

## Revendications

1. Câble à âme avec dureté et résistance à l'usure élevées comprenant une âme et une enveloppe extérieure, dans lequel l'âme a une composition en pourcentage de poids comprenant :
molybdène 1-10% ; tungstène 10-1% ; graphite 10-1% ; nickel 1-7% ; vanadium 10-2% ; chrome 40-20% ; fluorure de silicone sodium 5-15% ; ferro-niobium 10-1% ; bore 10-25% ; sable siliceux 2-10% ; terre rare 1-8%,
l'enveloppe extérieure consistant en de l'acier à faible teneur en carbone.

2. Câble selon la revendication 1, **caractérisé en ce que** l'enveloppe extérieure est faite d'acier à faible teneur en carbone H08A ayant une épaisseur de 0,6 mm.

3. Câble selon la revendication 1 ou 2, **caractérisé en ce que** la composition de ladite âme est
molybdène 10% ; tungstène 1% ; graphite 1% ; nickel 7% ; vanadium 2% ; chrome 20% ; fluorure de silicone sodium 15% ; ferro-niobium 1% ; bore 25% ; sable siliceux 10% ; terre rare 8%.

4. Procédé pour fabriquer un câble à âme avec dureté et résistànce à l'usure élevées comprenant les étapes consistant à
préparer une matière première d'une âme selon la composition définie selon la revendication 1, et moudre la matière première en une poudre et remuer vigoureusement ;
préparer un feuillard d'acier à faible teneur en carbone et placer ladite poudre d'âme sur le feuillard d'acier ;
extruder et presser la structure obtenue dans un câble cylindrique ; et
étirer ledit câble cylindrique avec une machine à tréfiler et obtenir le câble.

5. Procédé selon la revendication 4, **caractérisé en ce que** le feuillard d'acier est fait d'acier à faible teneur en carbone H08A.

6. Procédé selon la revendication 4, **caractérisé en ce que** le diamètre dudit câble est de 1,0-4,0 mm.

7. Procédé selon la revendication 4, **caractérisé en ce que** l'âme a une composition en
molybdène 10% ; tungstène 1% ; graphite 1% ; nickel 7% ; vanadium 2% ; chrome 20% ; fluorure de silicone sodium 15% ; ferro-niobium 1% ; bore 25% ; sable siliceux 10% ; terre rare 8%.
